# EUROPEAN PATENT SPECIFICATION

(11) **EP 0 430 933 B1**
(45) Date of publication and mention of the grant of the patent: **14.12.1994**
(21) Application number: 87904876.7
(22) Date of filing: 07.07.1987
(51) Int. Cl.: C10F 5/02, F26B 9/10, A01F 25/12

(54) **A METHOD AND APPARATUS FOR MECHANICAL DRYING OF AN ORGANIC FIBRE BASED MATERIAL AS STRAW MATERIALS, PEAT, WOODEN CHIPS AND THE LIKE**
VORRICHTUNG UND VERFAHREN ZUR MECHANISCHEN TROCKNUNG EINES ORGANISCHEN FASERMATERIALS, WIE STROH, TORF, HOLZSPÄNE UND SONSTIGES
PROCEDE ET APPAREIL DE SECHAGE MECANIQUE DE MATIERES A BASE DE FIBRES ORGANIQUES TELLES QUE DES MATIERES SOUS FORME DE PAILLE, DE LA TOURBE, DES COPEAUX DE BOIS ET ANALOGUE

(43) Date of publication of application: 12.06.1991
(73) Proprietor: OINAS, Heikki Kalervo, 96440 Rovaniemi (FI)
(72) Inventor: OINAS, Heikki Kalervo, 96440 Rovaniemi (FI)
(74) Representative: Hallam, Arnold Vincent
(86) International application number: FI8700093
(87) International publication number: WO8900185

(56) References cited:
- DE-A- 1 079 879
- DE-A- 1 143 357
- GB-A- 245 971
- GB-A- 613 162
- US-A- 2 859 683
- Statens maskinprovningar, Ultuna,Alnarp,meddelande 732, 27February 11945, see figure 2
- Derwent s abstracts No. Q1027 E/46, SU 895-348

## Description

A method and apparatus for mechanical drying of an organic fibre based material as straw materials, peat, wooden chips and the like.

The subject matter of the invention here presented is a method according to the introductory part of the Patent Claim 1 and an equipment according to the introductory part of Patent Claim 5 for the mechanical drying organic fibre-based loose materials, such as stalked materials, peat, wood chip and corresponding materials.

Endeavours have earlier been made in many different, ways to solve the drying of such materials, amongst which can be mentioned
- a drying frame according to the patent application publication DE 1143357, to which it is characteristic that the hurdle frame and the material loaded onto it are separated from the ground surface in order to create a free air flow inside the frame.
- the multi-layered repair and storage frame built onto a trailor and according to the patent application FI-3490/71 in which the material to be dried is laid out in several layers separated from one another in order to create a free air flow in between the material layers.
- a mobile ricking device according to patent publication FI-28291 for peat or similar material, which consists of two moving side walls in between which the peat is transferred from the conveyor, whereupon the peat falls between the side walls partly against the ground and partly onto the net, the purpose of which is to form a channel to the peat rick, the intention thereof being to improve airing of the peat rick and its drying.
- a method according to the patent publication FI-67260 for roofing and drying the rick, in which solution a perforated pipe is used inside the rick as the drying device. The pipe is connected to a fan and in this solution a roof is used to cover the rick, which is formed of two perforated sheets set in relation to each other.
- a method according to the patent publication FI-61357 for the drying of fresh grass or similar material, in which solution the material to be dried is ricked partly against the base and partly on the top of a latticed drying frame of truncated pyramid form, beneath which a fan has been arranged.
- a barn dryer according to the patent publication GB-1451957, to which it is characteristic that it includes a shelter from one end of which a tractor can be driven in and at the other end of which there is a fan for creating an air flow from one end of the aforementioned shelter to the space at the other end of the abovementioned shelter which is to be dried, for example further into the barn. It is characteristic to the solution that in connection with the fan burners have been located for heating the drying air flow and
- a drying method according to the patent application FI-393/74 for the drying of turf and milled peat on the harvesting site, to which solution it is characteristic that the drying section is lifted up onto the supporting parts and arranged so that it can be moved on the support of the bases, and in which solution the material to be dried is fed from above into the drying section end unloaded below from in between the supporting parts.

The aforementioned drying solutions can be divided into three groups by their fundamental principles;
I) solutions which are based on the drying of stalked or corresponding material on the top of a material rick or layer separated from the ground by means of a natural flow of air, i.e. DE-1143357 and FI03490/71. Similar arrangements are described in Statens Maskinprovar. This publication describes the formation of pyramidal supporting frames which are linked by longitudinal elements to define an elongate drying frame. The pyramidal supporting frames have upwardly projecting elements extending above the main drying frame but these are entirely enclosed by the heaped material forming a rick which is assembled on the drying frame. The rick is supported above floor level and dried naturally in the open air.
II) solutions which are based on the drying of stalked or corresponding material by forced or natural air flow in the top of a material rick or heap that is at least at the edges against the ground, i.e. FI-28291, FI-61357 and GB-1451957, and
III) solutions which are based on the separate drying of a heap of moving material with a drying device moving relative to the moving material FI-393/74.
Advantages of the drying solutions of Group 1 are the relatively low price and easy availability, but above all the disadvantage is the slowness of the drying process, from which follows the recognized fact that drying progresses frontally in the material layer, and as the result of this, especially in material intended for fodder, the loss of protein and the increased probability of mildew.

Amongst the weaknesses of the drying solutions of Group II, it can be mentioned that the frontal mode of drying cannot be completed with them at the same speed in all parts of the material rick. This problem has not been at all dealt with in the GB publication, as the publication in question concentrates in the main on the application of tractor shelter ventilation, the utilisation of which is limited solely to barns, whereas it has been considered very closely in the FI-61357 publication and as the solution offered to the problem it is proposed that parts of a rick be transferred to another rick and vice versa, depending on the progression of the drying front in different parts of the rick. Naturally such an arrangement is particularly difficult to carry out and demands constant supervision, the arrangement of the fan itself and the ducting connected to it are moreover complicated to make and if there is a fault in the fan system, maintenance is particulaly difficult. As a further weakness it must be mentioned that the part of the rick or heap that is against the ground absorbs moisture, which significantly slows the drying of the relevant material zones.

As the advantage of drying solutions similar to those of Group III, it can be held that the batch of material to be dried is clear of the soil, whereupon the risk of moisture absorption is eliminated, as the principal weaknesses it can be mentioned that taken as a whole, batch drying is slow and requires constant supervision for the drying process, thus being because of operational costs and the complexity of the equipment particularly expensive and prone to malfunction.

The primary objective of the invention here presented is to achieve an improved method and equipment for the mechanical drying of loose materials, especially organic fibre-based loose materials, in order that it would be possible to eliminate the characteristic drawbacks and weaknesses observed in earlier drying methods and to ensure the even distribution of a forced drying air flow throughout the material rick without material loss arid the risk of the absorption of ground moisture into the material rick.

These objectives have been attained with the method and equipment according to the invention, the characteristic distinguishing features of which are presented in the accompanying patent claim.

The invention is founded on the ingenious perception, that the thickness of the material rick heaped on top of the drying frame and the alignment relative to the drying frame can be visually determined by external inspection, and using then as part of the drying frame, vertical, e.g., post-like or similar elements as marking aids and horizontal, e.g. bar- or slim pole-like elements for height estimation and preventing compaction, and the edging equipment fitted to the sides of the drying frame composes uniform rick strength with sufficient accuracy and at the same time, with the aid of the longitudinal, supporting edging equipment horizontal to the earth, contact of the rick material with the ground can be prevented. Thanks to the even strength of construction through the rick it can now be ensured that there is an even flow of drying air through all parts of the rick, especially the peripheral zones of the rick near to the ground.

Among the principal advantages of the invention may be mentioned that the drying frame according to the invention and the edge fittings at its periphery are of simple construction and thus favourable for manufacture nor are there fan equipments to be rapidly exchanged, nor indeed any moving parts whatsoever, that the drying method or equipment do not impose any noteworthy limitations on the quantity of material to be dried, that due to the evenly distributed and forced airflow to all the parts of the rick the drying process is rapid, and is accompanied by a really favourable influence on the protein content in fodder intended for drying, and that the method or equipment according to the invention does not at all require monitoring work, naturally discounting the unavoidable protection of the material rick with the cover in the event of rainy weather. Further advantages connected with the invention that may be mentioned are that when using a drying frame according to the invention it can be accessed from either side for the whole way and the forking distance is kept short and that the handling equipment necessary for barn drying can be altogether dispensed with, i.e. for example bridge cranes, air bellows and the like) and that equipment according to the invention can be made large over a large area, whereupon with a wide drying air flow area and shallow rick layer a low back pressure can be achieved and the size of the fan equipment as well as its loading and energy consumption can be kept small. Further to the advantages connected with the invention it can also be verified that the baling work, as compared with barn drying for example, is easier by far.

With respect to other than stalk-like material, for example with chips and peat, the loading and unloading of a drier according to the invention can be carried out economically and efficiently. There is no hindrance from a fixed roof or a wall. In a modularly constructed application according to the invention and especially one to be applied to large scale production of chips or peat this is realized so that the vertical bars protruding vertically from the drier frame can be removed and the outer walling edge parts can be taken down and/or removed. By optionnally using the covering element the whole rick surface can be used as a collector of solar thermal energy. In a traditional storage drier an expensive special solution for the collection of solar thermal energy is needed.

The invention is illustrated in the following characteristic examples by referring to the attached drawings, in which
Fig. 1 presents a perspective view of one of the favourable modes of application of equipment according to the invention, which consists of a drying frame, drying frame peripheral edge fittings, fan equipment at one end of the drying frame and a covering element to be spread over the rick on top of the drying frame in rainy weather,
Figs 2a, 2b and 2c present several favourable modes of application of the support framework of the drying frame,
Fig. 3 presents a longitudinal cross-sectional view of the drying frame according to Fig. 1,
Fig. 4 presents a perspective view of a part of the longitudinal/horizontal edge fittings according to another favourable mode of application according to the invention, i.e. that is an edge-widening part suitable for widening the drying area,
Fig. 5a and 5b present several favourable devices for fastening the edge-widening parts according to Fig. 4, with adjustable location to the supporting framework of the drying frame,
Fig. 6 presents a perspective view of a part of the longitudinal/horizontal edge fittings according to a third favourable mode of application according to the invention, i.e. a walling structure for easing the location of the drying area wall, with which, in addition, the risk layer thickness can be increased, especially with easily overflowing materials, more than would otherwise be possible,
Fig. 7 presents a covering device according to the invention fitted to the drying equipment, kept rolled up in reserve, to be rolled out when taken into use, in which figure the cover is rolled out for use and tied at one edge to the vertical post,
Fig. 8 presents in perspective view part of the drying frame modules of the drying apparatus according to the invention,
In Fig.9 is a detail view of the interlinking of module parts to one another, and
Fig 10 presents the manner of mounting and installing the fan motor according to the invention and the mode of electrical installation.

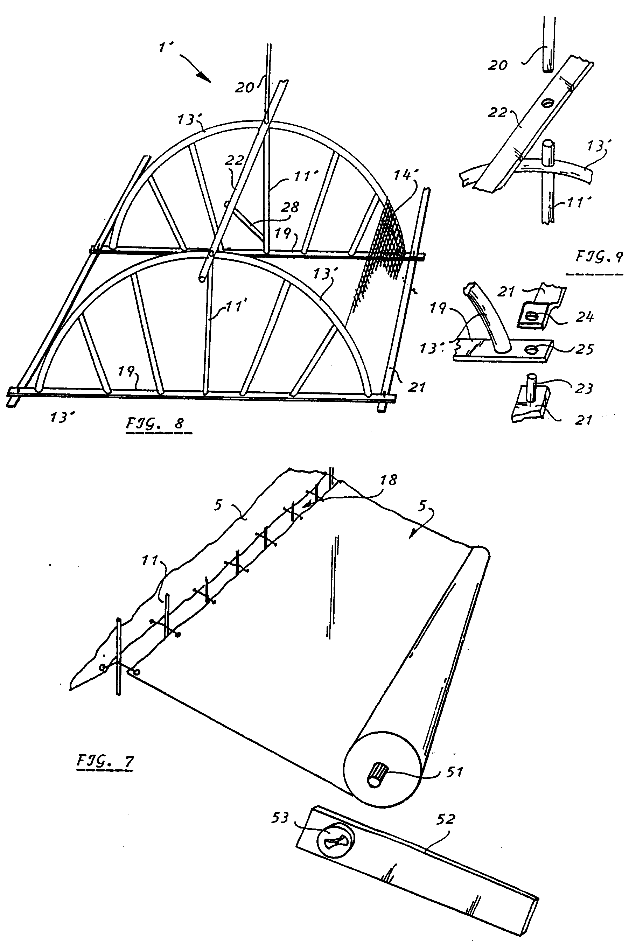

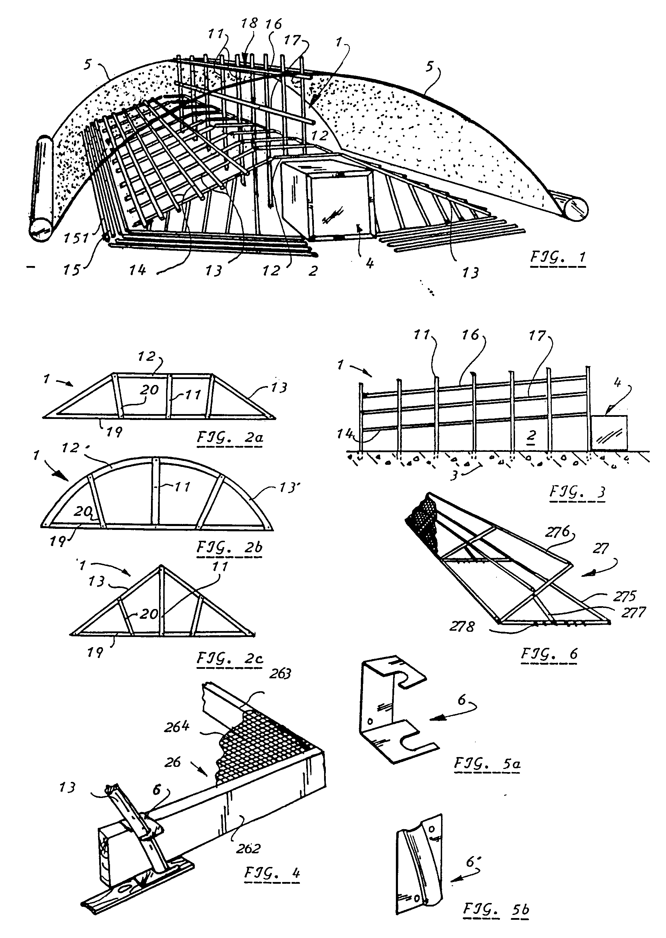

As can be seen from Figs 1 and 3 an equipment according to one favourable mode of application of the invention, primarily meant to be used in outside air, i.e. in field conditions and for the mechanical drying of organic fibre-based loose material, such as stalked materials, peat and wood chips etc, is formed of the drying frame 1, which limits the the drying air flow hollow or drying channel 2 on the underside extending to the ground, which channel will in future here be referred to as the air duct, and which together with the drying frame 1 and its edge fittings 15 carries the material to be dried as an even layer heaped into a rick in such manner that the material to be dried and the ground 3 do not come into contact with each other. Further the equipment according to the invention for the mechanical drying and attainment of forced air flow from air dust 2 through the material layer to outside air or conversely, from outer air through the material layer to air duct 2, includes fan unit 4, which is located in the end of duct 2. In addition the drying equipment according to the invention optionally includes a covering unit 5, to be used particularly in rainy weather and to be spread over the material layer to be dried to prevent its becoming wet.

As is evident from Fig 1 the drying frame 1 according to this advantageous mode of application includes several vertical, most advantageously post-like, vertical elements 11, favourably located at intervals between 0.5 - 2 m from each other and set into the earth along the same line, the length of each vertical being favourably between 2.0-4.0 m and carrying at a distance from the ground, favourably 2.0-0.3 m, one, most favourably bar-like, horizontal element 12, the length of which is favourably between 2.0-0.5 m and to tile free end of which element 12 is attached through an angle slanting downward from the horizontal a flank-, most favourably a bar-like element 13, the free end of which is supported against the ground. The consequence of too steep an angle is the danger of the material to be dried spilling off the top of the hurdle frame, for which reason the angle in question is advantageously selected between 20 deg-60 deg arid most favourably about 30 degrees. A vertical element 11, a horizontal element 12 and two flank elements compose in this mode of application one of the individual support frameworks of the drying frame on top of which the material intended for drying is heaped. In the application mode according to Figure 1 the base fittings leave openings between both the horizontal elements 12, and located on top of flank elements 13 the longitudinal, favourably bar-like elements 14, favourably of slats, which extend either individually or fitted end to end in the direction of the flank element lengths, the opening size being selected each time depending on the size of the particles of the material to be dried and the length of the drying element frame 1.

In order to prevent the material to be dried contacting the ground the drying frame includes at least a ground contact prevention edge 15 accompanying the drying frame as an edge fitting that extends to the ground at least on the longitudional side, edge 15 being supported against the ground and on top of it is piled the material to be dried that comes closest to the ground surface. The edge part mentioned in the advantageos mode of application according to Fig 1 is formed of several favourably pole-like elements 151, which are fitted parallel to each other at a short distance, favourably 1.0 - 5.0 m and against the ground for their whole length when it can be ensured that no air leakage occurs underneath the rick, but that all the air intended for drying only flows through the material layer to be dried to outside air or into the air duct and the rick is isolated from ground moisture.

It is not fundamentally significant from the operational aspects of the invention here presented which material is used for the individual members of the drying frame 1 or the ground moisture prevention edge 15 nor how they are connected to each other. It can however be verified that suitable manufacturing materials for the elements are for example, wood, plastics and metal arid that favourably individual elements are fastened for example, with removable pin or bolt connection to one another, so that storage over the winter of the drying frame and of individual elements of the aforementioned edging parts can be in a warehouse without them taking up much space and the assembly of the elements to the desired size is fast and trouble-free, if the drying frame is made of wood slats, the individual slats, for example of scrap wood, can be nailed to one another. The simplest mode is however to construct the equipment according to the invention on a site where it can be kept assembled over the winter.

It is fundamentally important for the material to be dried from the evenness and drying point of view that the material can be laid evenly and particularly that its upper parts are fundamentally in an uncompacted layer on top of the drying frame, and also that the air flow and its drying efficiency remain as evenly distribued as possible through the rick material while the drying of the material progresses. In order to achieve these objectives the free ends of the pole-like vertical elements 11 fundamentally project higher than the bar-like horizontal elements 12 fastened onto them, when the free ends of the aforementioned vertical elements 11 function on the one hand in heaping up the material to be dried onto the drying frame and on the other hand as aids in evaluating the thickness layer of the rick of material to be dried and again as an aid in evaluating the longitudional centre line of the rick to be formed. Then as the result of mere visual inspection it is possible to verify with sufficient accuracy both the evenness of the rick layer thickness and the location of the material rick relative to the drying frame. In order to prevent compaction of the rick material compaction preventive elements, favourably bar-like elements 16 and 17, are fastened onto the aforementioned vertical elements 11 in the direction of the drying frame longitudinal axis, favourably barlike compaction preventive equipments 16 and 17 which in part carry the rick material and prevent its whole weight pressing against the longitudinal elements 14 of the drying frame and it thus compacting.

Further, in order to achieve the above objectives it is important that the drying efficiency of the drying air is as constant as possible over the whole length of the material rick. For this reason the air duct 2 limited by the inside of the drying frame reduces in size starting from the end where fan equipment 4 is located. In Fig. 3 is illustrated a favourable mode of application of a drying frame according to the invention, tapering towards its rear end. In a drying frame meant for the drying of hay and stalk-like material in general the height of the air duct reduces, i.e. by lowering the location of the horizontal element on the vertical element, favourably over a distance of 10 -20 m by half of the original height at the starting end or, the fan equipment sided Thus the pressure loss caused by the air flowing through the risk to outside can be compensated for and the pressure prevailing in the air duct is set to optimal for the material quantity at each point of the rick, which makes possible the progress of the drying front in all parts of the risk at fundamentally constant speed.

As can still further be verified from Fig. 1 the equipment according to the invention includes a covering unit 5 for preventing the stalked material from becoming vet in rainy weather, which when not in use is kept rolled up and when taken into use is spread out over the risk. The covering unit in the favourable mode of application of Fig 1 is composed of two covering elements fitted on both the long sides of the drying frame 1, for example of light coverings 5, each of which are rolled up at the lover edge of drying frame 1, favourably close to the drying frame edge fittings 15, from which position they can be drawn out over the risk to be dried and fastened from the free long edge with suitable fastening devices, for example with the aid of straps, ropes or similar means, to the vertical elements 11, so that along the line passing through the vertical elements 11 is left a space between the longitudinal edges of the light coverings 5, the gap 18 extending along the full length of the risk, through which the damp air can escape to the outside air.

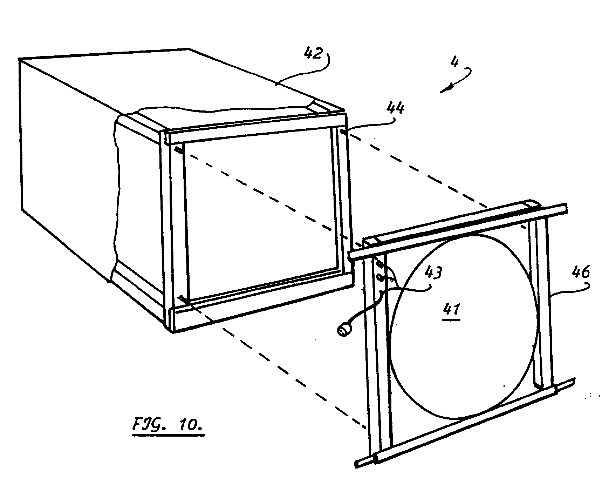

There is cause to conclude in this connection that keeping the light coverings 5 in roll is naturally not the only possible solution. Light coverings 5 can also be kept folded in store when not in use and fetched from there in time of rain and spread over the risk. Then, however, there is reason to reserve sufficient number of weight to hold the edges of the light coverings against the ground so that the wind cannot move the light covers off the rick. The application already mentioned before of a covering stored rolled up is presented in Fig 7 the advantage of which is an especially precise potential for utilisation of the weather condition. In this application the rotation mechanism 52, 53 of the shaft of the covering roll 51 is used as the removal and setting device of the cover 5, which is fitted to the lower edge of the rick flat, whereupon moving of the cover is carried out by dragging it along the risk material surface. There is reason to mention that the covering roll can naturally be located when not in use close to the vertical elements 11 and that the covering roll can be rolled upwards or downwards along the risk flat, then by setting the direction of rotation of the covering roll the selection of either baring the risk (cover rolling up) or covering the risk (cover spreading over) can be decided. In the mode of application according to Fig 7 the rotation mechanism in formed at the grooved end of covering roll shaft 51 by using e.g. the known sprung-loaded, ball-locking, detachably connected power device which includes the lever arm 52 and ratchet mechanism 53. As the power device in question other power devices, e.g. electrical or hydraulic power devices can naturally be used, the power output shaft of which, with suitable connection and power transmission, e.g. universal joint shaft, is connected to the covering roll shaft for its rotation
Although the matter has not been more accurately clarified above, the ends of the drying frame 1 can also be furnished with end elements or slats similar to flank elements 13 and end edging parts similar to the ground moisture prevention edging parts 15. The drying frame is then enclosed on all of its sides and also the ends of the drying frame car, be used as a base for the material to be dried. Additionally for the covering of the rick ends, end covers similar to the light covers described above, the gathering and spreading of which can be carried out when necessary in the manner described above.

In Figs 2a, 2b and 2c some favourable shapes of air duct 2 within the limitations of the drying frame are illustrated. The shape in Fig 2a is identical to that of the first favourable mode of application of the invention described in Fig 1 excluding the transverse strengthening or support element 19 in the base of the drying frame, the purpose of which is to stiffen the frame against the transverse direction of loading, and
the additional support element 20 between the joining points of flank and horizontal elements 11, 13 and the aforementioned support element 19. In the mode of application according to Fig 2b instead of the straight element 12 and the straight flank element 13 there is correspondingly a curved horizontal element 12' and a curved flank element 13', when a curving part, favourably of arced shape, is formed as part of the support frame of the drying frame with which it is possible to achieve the maximum circumferential area as the base of the material to be dried. In the mode of application according to Fig 2c the drying element is formed of vertical element 11 and immediately to it are fastened one end of the straight flank elements 13 and the stiffening or supporting element 19 in the base of frame, a triangular frame being generally stiff. As can be further verified from Figs 2b and 2c the drying frame support frames according to these modes of application can be furnished with an additional supporting element 20, such as in the mode of application in Fig 2b link the stiffening or supporting part 19 and the joint of the horizontal element 12' and the flank element 13, such as in Fig 2c link together the strengthening or supporting element 19 and the flank element 13.

When constructing the drying equipment according to the invention on site from stock pieces fundamentally into a form according to Fig 1 the air duct 2 can also be dimensioned to accurately correspond to the needs in its breadth direction but if the support frames are made with standard, for example industrial, sizes similar fundamentally according to Figs 2a, 2b, 2c or 8 and if the attainment of even air over the whole rick length so requires, the drying frame can be furnished with edge fitting part 26 according to Fig 4, a part widening the edge of the drying area, which to advantage can be affixed steplessly in both breadth or height direction to the flank element of the drying frame support construction, and is thus intended to be located between the drying frame 1 proper and the ground moisture prevention edge part 15.

As can be seen from the relevant Fig 4, the widening edge part 26 according to this mode of application is made up of elements 262 in the transverse direction relative to the longitudinal axis of frame 1, which elements can be of any material, most suitable wood or plastic, and in each of which edge parts are at least two pieces each connected to the flank element 13 where it reaches the ground, and the side element 263 running in the same direction relative to the longitudinal axis of the hurdle frame 1, each of which elements 263 are fastened at least from both ends to the transverse elements 262 where their free ends protrude from hurdle frame 1. In addition as can be seen from Fig 4 the edge widening part 26 includes in this mode of application a net base 264, in place of which slatting may also be used, and the net opening (or slat spacing) of which is made suitable for each material to be dried, i.e., the net openings that may be used with hay are larger than, for example those for use with wood chips, so that the material cannot spill through the net (or slat) openings inside the edge widening part 26. The edge widening part 26 according to this mode of application is fastened for an arrangement in the transverse direction to drying frame 1, whereupon the edge widening part 26 can be set suitably for the layer thickness of each rick material, so that the outermost peripheral surface of the rick material layer does not extend to the outermost longitudinal element 151 of the ground moisture prevention part 15 to be fitted beside the edge widening part. A really thick rick layer can then be reliably isolated from the ground, and adverse air gaps are not created between ground and rick surfaces.

In Figs 5a and 5b two favourable fitments for fastening the edge widening part 26 in place are presented. The locking fitment according to Figure 5a is formed of a generlly U-shaped metallic piece 6, the waist part of which is dimensioned to correspond to the height of the transverse element 262 of the edge widening part, and inside which the transverse element 262 is intended to fit. The forked parts of the U-piece then project beyond the transverse elements and in these forked parts are slots opening in opposite directions to each other and these are dimensioned to fit over the flank elements 13. When fitted in place to the transverse element, e.g. with the aid of screws, the slots support the flank elements in opposite directions and thus hold the transverse element as well as the whole of the edge widening part firmly in the desired place. By changing the position of the screw fastenings in the transverse element the whole position of the edge widening part 26 relative to drying frame 1 is changed especially in the lateral direction, but also when needed in the vertical direction. In the mode of application according to Fig 5b the locking fitment 6' is made from a formed plate in which there is a depression made to correspond with the shape of the flank element 13 and the height of which is dimensioned to correspond to the respective height of the transverse element 262. The locking fitment 6' according to this mode of application is used so that it is set over the flank element 13 and fastened, e.g., with screws in the desired place, whereupon the locking fitment 6' presses the flank element against the transverse element 262 and keeps it securely in place in the desired position. As before, by changing the position of the screw fastening the whole position of the widening edge part 26 relative to the drying frame 1 is changed.

In Fig 6 a third edging part according to one favourable mode of application of the invention is presented, i.e. a wall edging part 27, to be positioned in the direction of the longitudinal axis of drying frame 1, as an outer part of the edging equipment. The third edging part 27 according to this mode of this application is formed of a slat frame, which is arranged for folding on its long edge along the side of the drying frame, when it has the first framework part 275 supported on the ground and the second framework 276 that is intended for support by the external surface of the rick. In addition this secondary mode of application includes at least one device 277 for the adjustment and locking of the angle of inclination between the first and second frameworks 275 and 276 which is fastened, for example, by pin connection from its first end arm-like to the other framework part 276, and the other end of which is furnished with, for example, a drilled or perforated plate, so that the hole of the drilled or perforated plate is dimensioned to fit onto the pin-like protruding parts 278 set apart at intervals, whereupon by changing the position of the other end of the adjustment and locking element in relation to the edge part of the first framework the angle of inclination of this third mode of edge part can be adjusted. As can be further seen from Fig 6 the third edging part acccording to this mode of application can, if so desired, be furnished with a net (or with slats), the net opening size of which is selected to suit the material to be dried so that the material cannot spill through the openings in the net (or slats) to the ground.

The third edging part according to Fig 6 is then favourably an airy wall part, the purpose of which is, especially when there are large quantities of material to he dried, ease in making the rick and ensuring that the rick is correct in relation to the drying frame and the air duct beneath it, and thus making possible an even material layer throughout and the ideal even throughflow of air and also even drying. With the aid of such a wall edging part 27 the height of the rick in relation to its width can be greater than any natural spilling angle characteristic to the material would allow. On the merits of this effect it is possible to increase the rick height of easily spilling materials in ralation to its width, and as a further advantage, the shape of the air duct cross-section can be selected more freely.

Then the drying equipment according to the invention is thus formed of drying frame 1 which supports on its upper side the base fittings 14 for the material rick to be dried and limits on its lower side the air duct 2, to which is connected at least one fan device 4 for the creation of a drying air flow through the rick material layer, edge fittings, which consist of at least ground moisture prevention part 15 and wall edging part 27, or alternatively an edge widening part 26, ground moisture prevention part 15 and wall edging part 27, which edging parts keep the lowermost parts of the rick separated from the ground and especially the wall edging part 27 ensures correct location of the rick material relative to air duct 2, and an optionally used covering element, with which wetting of the rick is prevented if it rains. The wall edging part 27 being jointed can if need be dropped and/or removed if for example the emptying technique of the dryer so requires.

In Fig 8 a favourable mode of industrially manufactured drying hurdle of modular construction is presented, in which the manufacturing materials are favourably of plastic and metal.

As can be seen from Fig 8 the supporting framework 1' of the drying frame is formed of the first transverse element 19 against the ground, and in rectangular cross-sectional form, and of the second transverse element 13, of circular arc form and of round cross-section, which is together with another transverse element in the same vertical plane, as well as several intermediate elements 11' connecting the transverse elements and supporting the support framework, round in cross-section, the central of which, i.e. the one fitted on the centreline of the drying frame, the central intermediate element 11', passes through the curved transverse element 13' for the continuation of which, most suitably with a sleeve-like connection, is the vertical additional element 20, which functions as a marking device for the layer thickness and alignment of the rick material layer on top of the drying frame and also as a fastening support for the covering device spread over the material rick and is when necessary, for example when the dryer emptying technique so demands, easily removed from its sleeve or corresponding fastening. The drying frame 1' is stiffened in the longitudinal direction by a slanting supporting piece 28, which is fitted to connect the vertical intermediate support 11' and the strong longitudinal support 22 of at the least two successive supporting frameworks.

As can be still further verified from Fig 8 in this mode of application the ends of the arched tranverse elements 13' are sunk directly into the straight transverse element 19 near to its ends so that the ends of the straight transverse element are projecting for some war, favourably 10-40 cm outside the external circumference of the transverse elements 13'.

Such support frames 1' described above are suited for the formation of a drying frame with spaces between each other in the longitudinal axis direction and then supported at the relevant separation distance by longitudional spacer elements 21, which are joined together most suitably by such a connection as is presented in Fig 9 or by some other easily installed and dismantled connection. This connection of the longitudinal elements 21 and the transverse element 19 has been so made that at one end of the longtudinal elements to be joined together there is a pin-like protrusion 23 and in the other end there is a corresponding opening 24 suited to fit around it. The projecting end of the transverse element 19 is located in between the longitudinal elements to be joined together and for that reason the opening 25 is made in it through which the aforementioned protrusion 23 is fitted. Additionally in order to ensure the support of the supporting frames there is a longitudinal support 22 fitted to the ridge of the transverse curved elements of the drying frame in which there are several openings at a separation distance corresponding to the separation distances of the support frames which are arranged to fit over the end of the central intermediate element 11 of the support frame protruding beyond the outer circumference of the curving transverse element in the manner shown in Fig 9. Furthermore the drying frame according to this mode of application includes a net element 14' as the base for the heaped rick material, with which the longitudinal slatting 14 constructed on top of the flank element 13, as described in connection with Fig 1 at the beginning of this patent application, can be substituted. Such a net can be extended in one piece over the whole drying frame area or be made up of two net elements, one of which coveres one half of the drying frame and the other correspondingly the other half. Further it is important that the net opening size is selected to correspond to the particle size of the rick material to be dried so that no unnecessary spillage of the material into the air duct occurs.

When using the drying construction according to the invention the mechanical drying of the organic fibre-based loose material, such as stalked materials peat, chips and the like is performed as follows:
- the material to be dried is heaped on top of the upper side of the drying frame base fittings and the edge edge fittings, isolated from the ground surface for an even layer throughout, when marking aids projecting vertically upwards on the drying frame centreline, and optionally the outer wall edging parts included in the equipment edge fittings, are used as an aid,
- an airflow is set up in the air duct formed by the limitung underside of the drying frame, which is closed and is furnished at least at one end with a fan device, which airflow is in the beginning directed either from the air duct through the rick to outside air, or conversely from outside air through the rick to the air duct - for example on the vacuum principle whereupon air in the air duct is taken by the fan equipment from the air duct to outside air,
- during the rick drying period the direction of the air flow through the rick layer is changed, so that in irregular weather the fan can be use to advantage on the pressurised operation principle with the covering equipment spread out, but in reliably fine weather the covering equipment can be removed and the solar energy directed onto the rick can be utilized to the maximum and by occasionally using the fan in suction mode the heat energy can be utilized for drying deeper than the top surface layer and different moisture levels in the material layer can be evened out. With large quantities of material, for example in district heating station peat and chip consumption, it might he necessary to use two fan equipments 4 which can then be located in the opposite ends of the drying equipment, when the drying frame with its edge fittings is formed in two corresponding opposing halves relative to the transverse symmetrical axis, finally
- the dried material is collecte together either for storage or further processing or it can he stored by the drying equipment until it will be utilised.

According to one favourable mode of application of the invention the fan equipment 4 includes a power drive device, favourably an electric motor and its driven rotor, as well as the support frame surrounding the rotor and the inblowing and/or outblowing flow duct that is fitted as the continuation of the support frame, the duct being directly connected to air duct 2 limited by the lower side of drying frame 1, whence the only path to the outside air is through the fan equipment or through the rick' when the path of the forced airflow from the fan duct through air duct 2 to outside air or conversely from outside air through air duct 2 to the fan duct only passes through the rick material to be dried. How the fan duct is connected to the air duct limited by the drying frame l is not fundamental from the invention aspects but it is, however, advantageous that the connection is made as air-tight as possible, whereupon it is advantageous that the air duct projects some distance inside the drying frame 1 and that the end of the drying frame on the fan equipment 4 side is furnished with slanting vertical elements on top of which the material to be dried is set. Naturally fully enclosed end elements, for example of plastic sheet, can be used, in which there is an opening dimensioned to correspond to the fan duct dimensions.

When an electric motor is used as the power device in the fan equipment 4 it is advantageous that the mounting of the fan motor 41 and the electrical installations 43 are so fashioned that the attachment of the support frame 46 to the fan duct casing 42 is performed with bolts 44 or by quickly locking catches, and that the electrical switches 43, i.e. the star-delta safety switch, the switch to change the direction of rotation and the electrical power plug are mounted onto the aforementioned support frame 43, whereupon the fan equipment can be transferred as a complete unit with the aid of support frame 43 to another operational site. It is then possible to manufacture the fan motor/electrical switch combination industrially and thanks to the direction of rotation switch the the fan blowing direction can be changed in order to even out moisture differences and utilize the weather conditions to the optimun so as to speed up the drying.

The invention is only described above by exemplification with the aid of some favourable modes of application. The purpose in this is not to limit the invention but only to illustrate the wide possibilities of the ingenious basic perception of the invention. Thus, as will be clear to the professional person in this field, the invention can be varied to a remarkable degree in its constructional details and general appearance within the boundaries of the accompanying patent claims. In particular it should be noted that with large quantities of material it is necessary to use two fans which can be located at opposite ends of the drying equipment and then construct the drying equipment in two halves, which are mirror images of each other, and which could be separated from each other with an intermediate wall.

## Claims

1. An apparatus for the drying in open air of organic fibre-based loose materials such as straw materials, peat and wood chips, comprising;
an elongate drying frame (1) for carrying on its upper side in rick form the material to be dried, the drying frame forming with the ground (3) an air-flow duct (2);
the drying frame (1) comprising at least two generally planar supporting frames (11, 12, 13, 13'), the supporting frames extending transversely of the longitudinal axis of the drying frame (1); the supporting frames being linked together by longitudinal elements to define the elongate drying frame and the air-flow duct therewithin;
edge fittings (15, 26, 27) extending in the direction of the longitudinal axis of the drying frame (1) adjacent longitudinal edges thereof;
a plurality of vertical elements (11, 20) aligned along the longitudinal axis of the drying frame (1) so that material to be heaped on the drying frame is heaped about said vertical elements;
upper fittings (16, 17) extending longitudinally along the top of the drying frame (1) adjacent the vertical elements (11, 20) for reduction of compaction in the material rick formed;
characterised in that
the apparatus is a mechanical dryer having fan means (4) provided at least at one end of said air flow duct (2) for the creation of a forced air flow in said duct (2);
the vertical elements (11, 20) are indicator elements aligned along the longitudinal axis of the drying frame and extending a sufficient distance above the supporting frames to project through the layer thickness of material to be heaped on the drying frame to indicate the layer thickness and also to indicate the alignment of the material rick to be formed in relation to the longitudinal axis of the drying frame (1);
the edge fittings being arranged to support the material rick clear of the ground surface and to inhibit air-flow leakage through the intermediate space between the material rick and the ground whereby the air-flow caused by said fan means (4) is directed preferentially through the material of the rick;
and a covering means (5) for covering the material rick and affording an air gap above the rick for allowing passage of damp air.

2. Apparatus as claimed in claim 1 wherein said upper fittings (16, 17) are formed of at least two elongate elements extending longitudinally of the drying frame and secured to said vertical elements (11, 20).

3. Apparatus according to claim 1 or 2 wherein the air flow duct (2) narrows in the longitudinal direction of the drying frame away from said fan means.

4. Apparatus according to any of claims 1 to 3 wherein the edge fittings comprise a plurality of substantially parallel elongate elements (151) serving as dampness prevention members, each of which contacts the ground for closing the space between the material rick and the ground surface and directing the forced air-flow through the material.

5. Apparatus according to claim 4 wherein said edge fittings comprise an outermost wall edging means (27), supported on the ground and fitted immediately adjacent the dampness prevention members (15),
wherein said wall edging means comprises:
a slat framework having a first, lower frame (275) supported on the ground and a second, upper frame extending from said lower frame for supporting against the material stack outside perimeter said upper frame having a net for the passage of air; and
a locking element (277) for the adjustment and locking of the angle between the first and the second frames.

6. Apparatus as claimed in claim 5 wherein said locking element (277) is pivotally connected to said first frame and is connectable to said second frame by a pin.

7. Apparatus according to any of claims 1 to 6 wherein the edge fittings comprise:
edge widening means (26) fitted immediately adjacent the longitudinal edges of the frame against the ground for extending the drying area, the edge widening means comprising a frame open to the air duct (2), and having at least one longitudinal frame element (263) and at least two transverse elements (262) secured to the ends of said longitudinal frame elements;
and wherein said frame elements (262, 263) are each against the ground and carry on an upper side thereof a base means (264) for allowing passage of air-flow through the material stack.

8. Apparatus according to claim 7 wherein said base means (264) is formed by a net or a plurality of slats.

9. Apparatus according to any of claims 1 to 8 wherein the covering means comprises at least two covering elements (5) each of which is moveable from a first position adjacent said vertical elements to a second position whereby said covering element covers a respective supporting frame (11, 12, 13, 13'); and wherein said covering elements are provided along their adjacent longitudinal edges with fastening means for securing the covering elements to the vertical elements (11, 20) to form a gap (18) between the covering elements for allowing escape of damp air.

10. Apparatus according to claim 9 wherein said fastening means comprises straps or ropes.

11. Apparatus according to claim 9 or 10 wherein said covering elements are stored on respective roll means and further comprising drive means for rolling and unrolling said covering means.

12. Apparatus according to claim 11 wherein said drive means comprises a manually operable lever arm (52) or an electric or hydraulic motor detachably connectable to a centre shaft (51) of said roll means.

13. Apparatus according to any of claims 1 to 12 wherein said fan means comprises a rotor support frame (46) detachably secured by securing means (44) to a fan duct (42) which is in turn coupled to the flow duct (2); and wherein furnishings and electrical connections (43) for the fan means are secured relative to said support frame (43) for movement with the support frame.

14. Apparatus according to any of claims 1 to 13 wherein said fan means has an electric drive motor and switch means for controlling the direction of rotation of said motor for changing the direction of flow of air through said air-flow duct (2).

15. Apparatus according to any of claims 1 to 14 wherein said drying frame has end supporting frames for supporting said generally planar supporting frames and wherein each said supporting frame is modular in construction;
wherein each said end supporting frame has a first, generally straight element (19) for contacting the ground and a second, generally curved element (13') lying in substantially the same vertical plane as said first element (19), and a plurality of intermediate elements (11) interconnecting said first and second elements;
and wherein said end supporting frames are interconnected by longitudinal elements (21, 22) extending substantially parallel to the longitudinal axis of the drying frame, one of said longitudinal elements interconnecting said first elements (19) and a second of said longitudinal elements interconnecting said second elements (13') substantially at their uppermost point, and further angled elements (28) interconnecting said intermediate elements (11') and said second longitudinal element (22) substantially along the centre line of the drying frame.

16. Apparatus according to any of claims 1 to 15 comprising at least two fan means (4) located at opposite ends of the drying frame and wherein said drying frame comprises two halves arranged on respective sides of an axis of symmetry.

17. A method for mechanical drying in open air of an organic fibre-based material such as straw material, peat or wood chips, using a drying frame according to any one of claims 1 to 16, the method comprising:
heaping the material to be dried on top of the drying frame along the drying frame to form a rick spaced from the ground;
ensuring that the material is of a uniform layer thickness along said drying frame by comparing the outer surface of the heap of loose material with said vertically projecting elements (11, 11', 20) and said edge fittings (15, 27); and creating an air-flow through the material on the drying frame, by operation of the fan means.

18. A method according to claim 17 further characterised in that the fan means are operated alternately in opposite directions so as to change the direction of flow of air through the heaped material rick.

19. A method as claimed in claim 17 or claim 18 further comprising sealing the intermediate space between the rick under surface and the ground surface for preventing airflow leakage past said edge fittings.

20. A method as claimed in any one of claims 17 to 19 further comprising covering said rick with a covering means (5) for protecting said rick from rain, said covering means being spaced from said rick material to provide a gap between said covering means on said rick material for the passage of damp air.

## Patentansprüche

1. Vorrichtung zum Trocknen von losem Material auf der Basis organischer Fasern, wie Strohmaterial , Torf und Holzspänen, an der Luft, welche folgende Elemente umfaßt:
ein langgestrecktes Trockengestell (1), das auf seiner Oberseite das zu trocknende Material in Form einer Miete trägt, wobei das Trockengestell mit dem Boden (3) einen Luftstromkanal (2) bildet;
wobei das Trockengestell (1) wenigstens zwei im allgemeinen plane Stützrahmen (11, 12, 13, 13') aufweist und die Stützrahmen quer zur Längsachse des Trockengestells (1) verlaufen; wobei die Stützrahmen miteinander durch Längselemente verbunden sind, um das langgestreckte Trockengestell und darin den Luftstromkanal zu bilden;
Kantenverbinder (15, 26, 27), die in Richtung der Langsachse des Trockengestells (1) an dessen Längskanten verlaufen;
eine Vielzahl senkrechter Elemente (11, 20), die längs der Längsachse des Trockengestells (1) ausgerichtet sind, so daß Material, das auf das Trockengestell aufzuschütten ist, um diese senkrechten Elemente aufgeschüttet wird;
obere Verbinder (16, 17), die längs der Oberkante des Trockengestells (1) an den senkrechten Elementen (11, 20) verlaufen, um das Verdichten der gebildeten Materialmiete zu verringern;
dadurch gekennzeichnet, daß
die Vorrichtung ein mechanischer Trockner ist, der Gebläsemittel (4) hat, die wenigstens an einem Ende des Luftstromkanals (2) bereitgestellt werden, um in dem Kanal (2) einen erzwungenen Luftstrom zu bilden;
die senkrechten Elemente (11, 20) Anzeigeelemente sind, die längs der Längsachse des Trockengestells ausgerichtet sind und in ausreichendem Abstand über den Stutzrahmen verlaufen, um durch die Stärke der Schicht des auf dem Trockengestell aufzuschüttenden Materials vorzustehen, um auf diese Weise sowohl die Stärke der Schicht als auch die Ausrichtung der zu bildenden Materialmiete im Verhältnis zur Längsachse des Trockengestells (1) anzuzeigen;
wobei die Kantenverbinder so angeordnet sind, daß sie die Materialmiete über der Bodenoberfläche tragen und ein Austreten des Luftstromes durch den Zwischenraum zwischen der Materialmiete und dem Boden verhindern, wodurch der Luftstrom, der durch das Gebläsemittel (4) verursacht wird, vorzugsweise durch das Material der Miete gelenkt wird;
ein Abdeckmittel (5) vorhanden ist, um die Materialmiete abzudecken und einen Luftspalt über der Miete zu bilden, um den Durchgang von feuchter Luft zu ermöglichen.

2. Vorrichtung nach Anspruch 1, bei welcher die oberen Verbinder (16, 17) aus wenigstens zwei Längselementen gebildet werden, die längs des Trockengestells verlaufen und an den senkrechten Elementen (11, 20) befestigt sind.

3. Vorrichtung nach Anspruch 1 oder 2, bei welcher sich der Luftstromkanal (2) in der Längsrichtung des Trockengestells vom Gebläsemittel weg verengt.

4. Vorrichtung nach einem der Ansprüche 1 bis 3, bei welcher die Kantenverbinder eine Vielzahl von im wesentlichen parallelen Längselementen (151) aufweisen, die als Mittel zur Verhinderung von Feuchtigkeit dienen, wobei jedes dieser Elemente Kontakt mit dem Boden hat, um den Raum zwischen der Materialmiete und der Bodenoberfläche zu schließen und den erzwungenen Luftstrom durch das Material zu lenken.

5. Vorrichtung nach Anspruch 4, bei welcher die Kantenverbinder ein äußerstes Wandkantenelement (27) aufweisen, das sich auf den Boden stützt und unmittelbar neben den Mitteln zur Verhinderung von Feuchtigkeit (15) angebracht ist,
wobei das Wandkantenelement folgende Elemente aufweist:
ein Rahmengestell aus Latten, das einen ersten, unteren Rahmen (275), der sich auf den Boden aufstützt, und einen zweiten, oberen Rahmen hat, der von dem unteren Rahmen ausgeht, um sich gegen die Außenseite der Materialmiete abzustützen, wobei der obere Rahmen ein Netz für den Durchgang von Luft hat, und
ein Feststellelement (277) zur Einstellung und Feststellung des Winkels zwischen dem ersten und dem zweiten Rahmen.

6. Vorrichtung nach Anspruch 5, bei welcher das Feststellelement (277) drehbar mit dem ersten Rahmen verbunden ist und durch einen Stift mit dem zweiten Rahmen verbunden werden kann.

7. Vorrichtung nach einem der Ansprüche 1 bis 6, bei welcher die Kantenverbinder folgende Elemente aufweisen:
Kantenaufweitungsmittel (26), das unmittelbar an den Längskanten des Rahmens gegen den Boden hin angebracht wird, um den Trocknungsraum auszudehnen, wobei das Kantenaufweitungsmittel einen Rahmen aufweist, der zum Luftkanal (2) hin offen ist, und wenigstens ein Rahmenlängselement (263) und wenigstens zwei Rahmenquerelemente (262), die an den Enden der Rahmenlängselemente befestigt sind, hat;
und bei welcher die Rahmenelemente (262, 263) jeweils gegen den Boden gehen und auf ihrer Oberseite ein Basiselement (264) tragen, um den Durchgang des Luftstromes durch die Materialmiete zu ermöglichen.

8. Vorrichtung nach Anspruch 7, bei welcher das Basiselement (264) durch ein Netz oder eine Vielzahl von Latten gebildet wird.

9. Vorrichtung nach einem der Ansprüche 1 bis 8, bei welcher das Abdeckmittel wenigstens zwei Abdeckelemente (5) aufweist, die jeweils aus einer ersten Position an den senkrechten Elementen in eine zweite Position bewegt werden können, wodurch das genannte Abdeckelement einen entsprechenden Stützrahmen (11, 12, 13, 13') bedeckt; und bei welcher die Abdeckelemente längs der angrenzenden Längskanten mit Befestigungsmitteln zur Befestigung der Abdeckelemente an den senkrechten Elementen (11, 20) versehen sind, um einen Spalt (18) zwischen den Abdeckelementen zu bilden, um den Austritt von feuchter Luft zu ermöglichen.

10. Vorrichtung nach Anspruch 9, bei welcher die Befestigungsmittel Riemen oder Seile umfassen.

11. Vorrichtung nach Anspruch 9 oder 10, bei welcher die Abdeckelemente auf entsprechenden Rollenmitteln gelagert werden und außerdem Antriebsmittel aufweisen, um die Abdeckmittel abzurollen und aufzurollen.

12. Vorrichtung nach Anspruch 11, bei welcher die Antriebsmittel einen von Hand zu bedienenden Hebelarm (52) oder einen elektrischen oder hydraulischen Motor umfassen, die abnehmbar mit einer Mittelwelle (51) der Rollenmittel verbunden werden können.

13. Vorrichtung nach einem der Ansprüche 1 bis 12, bei welcher das Gebläsemittel einen Rotor-Stützrahmen (46) aufweist, der durch Befestigungsmittel (44) abnehmbar an einem Gebläsekanal (42) befestigt werden kann, der wiederum mit dem Luftstromkanal (2) gekoppelt ist; und bei welcher Zubehörteile und elektrische Verbindungen (43) für das Gebläsemittel im Verhältnis zum Stützrahmen (46) zur Bewegung mit dem Stützrahmen befestigt sind.

14. Vorrichtung nach einem der Ansprüche 1 bis 13, bei welcher das Gebläsemittel einen elektrischen Antriebsmotor und Schaltmittel zur Steuerung der Rotationsrichtung des Motors hat, um die Strömungsrichtung der Luft durch den Luftstromkanal (2) ändern zu können.

15. Vorrichtung nach einem der Ansprüche 1 bis 14, bei welcher das Trockengestell Stütz-Endrahmen zum Tragen der allgemein planen Stützrahmen hat und bei welcher jeder der Stützrahmen in Modulbauweise ausgeführt ist,
bei welcher jeder der Stütz-Endrahmen ein erstes, allgemein gerades Element (19), das den Kontakt zum Boden herstellt, und ein zweites, generell gebogenes Element (13'), das im wesentlichen in derselben senkrechten Ebene wie das erste Element (19) liegt, und eine Vielzahl von Zwischenelementen (11) hat, welche die ersten und zweiten Elemente; miteinander verbinden;
und bei welcher die Stütz-Endrahmen untereinander durch Längselemente (21, 22) verbunden sind, die im wesentlichen parallel zur Längsachse des Trockengestells verlaufen, wobei eines der Längselemente die ersten Elemente (19) untereinander verbindet und ein zweites der Längselemente die zweiten Elemente (13') im wesentlichen an ihrem höchsten Punkt untereinander verbindet, und außerdem Winkelelemente (28) die Zwischenelemente (11') und das zweite Längselement (22) im wesentlichen längs der Mittellinie des Trockengestells miteinander verbinden.

16. Vorrichtung nach einem der Ansprüche 1 bis 15, die wenigstens zwei Gebläsemittel (4) aufweist, die sich an den entgegengesetzten Enden des Trockengestells befinden, und bei welcher das Trockengestell zwei Hälften aufweist, die auf den entsprechenden Seiten einer Symmetrieachse angeordnet sind.

17. Verfahren zum mechanischen Trocknen eines Materials auf der Basis organischer Fasern, wie Strohmaterial , Torf oder Holzspänen, an der Luft, unter Anwendung eines Trockengestells nach einem der Ansprüche 1 bis 16, wobei die Methode folgende Schritte aufweist:
Aufschütten des zu trocknenden Materials auf die Oberseite des Trockengestells längs des Trockengestells, um eine Miete zu bilden, die einen Abstand gegenüber dem Boden aufweist;
Sicherstellen, daß das Material längs des Trockengestells eine einheitliche Material-Schichtstärke aufweist, durch Vergleich der äußeren Oberfläche der Aufschüttung des losen Materials mit den senkrecht vorstehenden Elementen (11, 11', 20) und den Kantenverbindern (15, 27), und
Erzeugen eines Luftstromes durch das Material auf dem Trockengesteil durch Betätigung des Gebläsemittels.

18. Verfahren nach Anspruch 17, außerdem dadurch gekennzeichnet, daß das Gebläsemittel abwechselnd in entgegengesetzten Richtungen betrieben wird, um so die Richtung des Luftstromes durch die aufgeschüttete Materialmiete zu ändern.

19. Verfahren nach Anspruch 17 oder Anspruch 18, das außerdem das Abdichten des Zwischenraumes zwischen der Mietenunterfläche und der Bodenoberfläche umfaßt, um ein Austreten des Luftstromes über die Kantenverbinder hinaus zu verhindern.

20. Verfahren nach einem der Ansprüche 17 bis 19, das außerdem das Abdecken der Miete mit einem Abdeckmittel (5) umfaßt, uni die Miete vor Regen zu schützen, wobei das Abdeckmittel einen Abstand gegenüber dem Mietenmaterial aufweist, um zwischen dem Abdeckmittel und dem Mietenmaterial einen Spalt für den Durchgang von feuchter Luft zu bilden.

## Revendications

1. Appareil pour le séchage à l'air libre de matériaux en vrac à base de fibres organiques telles que paille, tourbe et copeaux de bois, comprenant:
un châssis de séchage allongé (1) pour supporter, sur son côté supérieur en forme de meule, le matériau à sécher, le châssis de séchage formant avec le sol (3) un passage (2) pour l'écoulement de l'air;
le châssis de séchage (1) comprenant au moins deux châssis de support généralement plans (11, 12, 13, 13'), les châssis de support étant disposés transversalement par rapport à l'axe longitudinal du châssis de séchage (1), les châssis de support étant assemblés l'un à l'autre par des éléments longitudinaux pour former le châssis de séchage allongé et le passage d'écoulement d'air entre ceux-ci;
des accessoires de bord (15, 26, 27) disposés dans la direction de l'axe longitudinal du châssis de séchage (1), près des bords longitudinaux de celui-ci;
plusieurs éléments verticaux (11, 20) alignés avec l'axe longitudinal du châssis de séchage (1), de façon que le matériau à empiler sur le châssis de séchage soit empilé autour desdits éléments verticaux;
des accessoires supérieurs (16, 17) disposés longitudinalement au sommet du châssis de séchage (1) près des éléments verticaux (11, 20) pour diminuer le tassement de la meule de matériau formée;
caractérisé en ce que
l'appareil est un séchoir mécanique ayant des ventilateurs (4) disposé au moins à une extrémité dudit passage d'écoulement d'air (2) pour créer un écoulement d'air forcé dans ledit passage (2);
les éléments verticaux (11, 20) sont des éléments indicateurs alignés avec l'axe longitudinal du châssis de séchage et s'étendant à une distance suffisante au-dessus des châssis de support pour faire saillie à travers l'épaisseur de la couche de matériau à empiler sur le châssis de séchage pour indiquer l'épaisseur de la couche et pour indiquer aussi l'alignement de la meule de matériau à former par rapport à l'axe longitudinal du châssis de séchage (1);
les accessoires de bord étant conçus pour supporter la meule de matériau à l'écart de la surface du sol et pour empêcher les fuites d'air à travers l'espace intermédiaire entre la meule de matériau et le sol, de façon que l'écoulement d'air créé par lesdits ventilateurs (4) soit envoyé préférentiellement à travers le matériau de la meule;
et des moyens de couverture (5) pour recouvrir la meule de matériau et créer un intervalle d'air au-dessus de la meule, pour permettre le passage de l'air humide.

2. Appareil selon la revendication 1, dans lequel lesdits accessoires supérieurs (16, 17) sont formés d'au moins deux éléments allongés disposés longitudinalement par rapport au châssis de séchage et fixés auxdits éléments verticaux (11, 20).

3. Appareil selon la revendication 1 ou 2, dans lequel le passage d'écoulement d'air (2) se rétrécit dans la direction longitudinale du châssis de séchage à partir desdits ventilateurs.

4. Appareil selon l'une quelconque des revendications 1 à 3, dans lequel les accessoires de bord comprennent plusieurs éléments allongés (151) essentiellement parallèles servant d'éléments pour éviter l'humidité, chacun d'eux étant en contact avec le sol pour fermer l'espace entre la meule de matériau et la surface du sol et pour diriger l'écoulement d'air forcé à travers le matériau.

5. Appareil selon la revendication 4, dans lequel lesdits accessoires de bord comprennent un moyen de bord de paroi extérieure (27) supporté sur le sol et disposé immédiatement à proximité des éléments d'empêchement de l'humidité (15), dans lequel ledit moyen de bord de paroi comprend:
un châssis à lattes ayant un premier châssis inférieur (275) supporté sur le sol et un deuxième châssis supérieur partant dudit châssis inférieur pour supporter la pile de matériau à l'extérieur du périmètre dudit châssis supérieur ayant un réseau pour le passage de l'air; et
un élément de blocage (277) pour le réglage et le blocage de l'angle entre le premier châssis et le deuxième châssis.

6. Appareil selon la revendication 5, dans lequel ledit élément de blocage (277) est connecté à pivot audit premier châssis et peut être connecté audit deuxième châssis par une broche.

7. Appareil selon l'une quelconque des revendications 1 à 6, dans lequel les accessoires de bord comprennent:
des moyens d'élargissement de bord (26) montés immédiatement à proximité des bords longitudinaux du châssis contre le sol pour étendre la zone de séchage, les moyens d'élargissement de bord comprenant un châssis ouvert vers le passage d'air (2) et ayant au moins un élément de châssis longitudinal (263) et au moins deux éléments transversaux (262) fixés aux extrémités desdits éléments de châssis longitudinaux;
et dans lequel lesdits éléments de châssis (262, 263) sont chacun fixés contre le sol et supportent, par leur côté supérieur, un élément de base (264) pour permettre le passage de l'écoulement d'air à travers la pile de matériau.

8. Appareil selon la revendication 7, dans lequel ledit moyen de base (264) est constitué d'un réseau ou de plusieurs lattes.

9. Appareil selon l'une quelconque des revendications 1 à 8, dans lequel les moyens de couverture comprennent au moins deux éléments de couverture (5), dont chacun peut se déplacer depuis une première position proche desdits éléments verticaux jusqu'à une deuxième position dans laquelle ledit élément de couverture recouvre un châssis de support correspondant (11, 12, 13, 13'); et dans lequel lesdits éléments de couverture sont disposés avec leurs bords longitudinaux voisins des éléments de fixation pour fixer les éléments de couverture aux éléments verticaux (11, 20) pour former un intervalle (18) entre les éléments de couverture, afin de permettre l'échappement de l'air humide.

10. Appareil selon la revendication 9, dans lequel ledit moyen de fixation comprend des sangles ou des câbles.

11. Appareil selon la revendication 9 ou 10, dans lequel lesdits éléments de couverture sont stockés sur des rouleaux correspondants et comprennent en outre un moyen d'entraînement pour enrouler et dérouler lesdits éléments de couverture.

12. Appareil selon la revendication 11, dans lequel ledit moyen d'entraînement comprend un bras de levier (52) actionnable manuellement ou un moteur électrique ou hydraulique connectable de manière amovible à un arbre central (51) desdits rouleaux.

13. Appareil selon l'une quelconque des revendications 1 à 12, dans lequel lesdits ventilateurs comprennent un châssis de support de rotor (46) fixé de manière amovible par des moyens de fixation (44) à un conduit de ventilateurs (42), qui est connecté à son tour au passage d'écoulement (2) et dans lequel les connexions électriques et d'alimentation (43) pour les ventilateurs sont fixées par rapport audit châssis de support (46) pour permettre leur déplacement avec le châssis de support.

14. Appareil selon l'une quelconque des revendications 1 à 13, dans lequel lesdits ventilateurs ont un moteur de commande électrique et un commutateur pour commander le sens de rotation dudit moteur afin de changer le sens de l'écoulement de l'air à travers ledit passage d'écoulement d'air (2).

15. Appareil selon l'une quelconque des revendications 1 à 14, dans lequel ledit châssis de séchage a des châssis de support d'extrémité pour supporter lesdits châssis de support généralement plans et dans lequel chacun desdits châssis de support est de construction modulaire;
dans lequel chaque châssis de support d'extrémité a un premier élément (19) généralement droit pour venir en contact avec le sol, et un deuxième élément (13') généralement courbe disposé essentiellement dans le même plan vertical que le premier élément (19), et plusieurs éléments intermédiaires (11) interconnectant lesdits premier et deuxième éléments,
et dans lequel lesdits châssis de support d'extrémité sont interconnectés par des éléments longitudinaux (21, 22) disposés essentiellement parallèlement à l'axe longitudinal du châssis de séchage, l'un desdits éléments longitudinaux interconnectant lesdits premiers éléments (19) et un deuxième élément desdits éléments longitudinaux interconnectant les deuxièmes éléments (13') essentiellement à leurs points les plus élevés et, en outre, des éléments angulaires (28) interconnectant les éléments intermédiaires (11') et ledit deuxième élément longitudinal (22), essentiellement suivant la ligne médiane du châssis de séchage.

16. Appareil selon l'une quelconque des revendications 1 à 15, comprenant au moins deux ventilateurs (4) disposés aux extrémités opposées du châssis de séchage et dans lequel ledit châssis de séchage comprend deux moitiés disposées sur les côtés respectifs d'un axe de symétrie.

17. Procédé de séchage mécanique à l'air libre d'un matériau à base de fibres organiques telles que paille, tourbe ou copeaux de bois, en utilisant un châssis de séchage selon l'une quelconque des revendications 1 à 16, le procédé comprenant les opérations suivantes:
empiler le matériau à sécher au-dessus du châssis de séchage le long du châssis de séchage pour former une meule écartée du sol;
réaliser une épaisseur de couche uniforme du matériau le long dudit châssis de séchage par comparaison de la surface extérieure du tas de matériau en vrac avec lesdits éléments verticaux en saillie (11, 11', 20) et lesdits accessoires de bord (15, 27); et créer un écoulement d'air à travers le matériau sur le châssis de séchage en faisant fonctionner les ventilateurs.

18. Procédé selon la revendication 17, caractérisé en outre par le fait que les ventilateurs fonctionnent alternativement dans des sens opposés, de façon à modifier le sens d'écoulement de l'air à travers la meule de matériau empilés.

19. Procédé selon la revendication 17 ou la revendication 18, comprenant en outre la fermeture hermétique de l'espace intermédiaire entre la meule sous la surface et la surface du sol pour empêcher les fui tes d'air par lesdits accessoires de bord.

20. Procédé selon l'une quelconque des revendications 17 à 19, comprenant en outre le recouvrement de ladite meule par des moyens de couverture (5) pour protéger ladite meule contre la pluie, lesdits moyens de couverture étant écartés dudit matériau de la meule pour réaliser un intervalle entre lesdits moyens de couverture sur ledit matériau de la meule, pour permettre le passage de l'air humide.
